# EUROPEAN PATENT APPLICATION

(11) **EP 2 031 026 A1**
(43) Date of publication of application: **04.03.2009**
(21) Application number: 07017056.8
(22) Date of filing: 31.08.2007
(51) Int. Cl.: C09B 19/02

(54) **Synthesis of triphenodioxazine pigments**

(71) Applicant: Clariant International Ltd., 4132 Muttenz (CH)
(72) Inventor: Kempter, Peter, Dr., 65812 Bad Soden (DE); Streck, Wilhelm, 25845 Nordstrand (DE)
(74) Representative: Hütter, Klaus

(57) **Abstract**

The invention relates to a process for the preparation of compounds of the general formula (I) 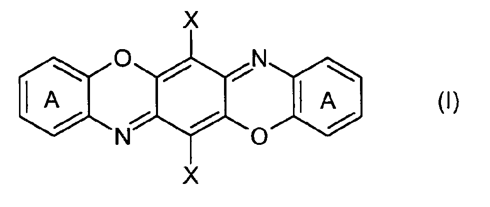 where
X are halogen atoms,
the rings labeled A are linearly or angularly fused in position 1,2; 2,3 or 3,4, and in position 8,9; 9,10 or 10,11, to a 5- or 6-membered heterocyclic ring containing in the ring one nitrogen atom and one oxygen atom, or containing in the ring two nitrogen atoms,
comprising an oxidation of a 3,6-bisarylamino-2,5-dihalobenzoquinone of the formula (II) 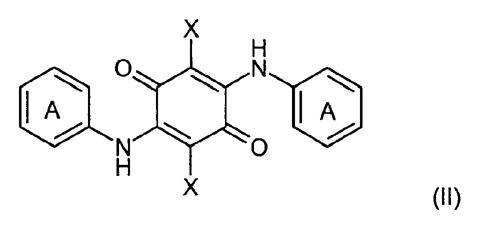 in an aprotic-polar organic solvent in the presence of an organic sulfonic acid.

## Description

The invention relates to a particularly advantageous process for the preparation of triphenodioxazine compounds by oxidative ring closure in aprotic-polar organic solvents.

US 5,565,563, DE-A-44 42 291, and EP-A-0 889 046 describe triphenodioxazine compounds of the following general formula 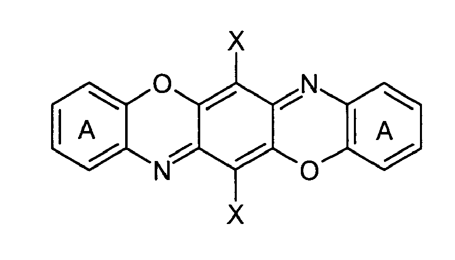 where
X represents hydrogen or halogen atoms.

The rings labeled A carry rings which are fused linearly or angularly and consist of radical members, among others, of the formulae -NR₁-(CO)ₘ-NH-, -NR₁-(CO)-O-, or -CR₁=CH-CO-NH-.

These compounds are particularly useful as pigments for coloring plastics including both solvent-free and solvent-containing masses of plastics or plastic resins. These include oil-based or aqueous paint systems and lacquers of various kinds. These compounds are also suitable for spin coloring of viscose or cellulose acetate, for pigmenting of polyethylene, polystyrene, polyvinylchloride, rubber or artificial leather. They can also be used for printing graphic fabrics, for coloring paper masses, for coating of textiles or for any other pigment printing process. The resulting pigmentations have excellent fastness to heat, light and weathering and chemicals. The pigments retain good strength of color and have good application properties. In particular, they have good fastness to migration, blooming, overcoating and solvents.

The preparation process disclosed in US 5,565,563 and EP-A-0 889 046 starts from intermediates i.e. amino compounds, which are ortho-substituted by an alkoxy group and are obtainable only by way of a relatively complex synthesis.

The preparation process disclosed in DE-A-44 42 291 starts from unsubstituted amino compounds, which are easily obtainable. The pigment synthesis is performed with manganese dioxide in concentrated sulfuric acid and requires the isolation of intermediate products. An after treatment of the crude pigment in an organic solvent is often necessary to obtain the required pigment properties.

The object of the invention is to provide a novel process for producing triphenodioxazine pigments of formula (I) in high yields.

It was found surprisingly that these pigments can be prepared by oxidation of the respective 2,5-bisarylamino-1,4-benzoquinones in aprotic-polar solvents, but only in the presence of an organic acid. This finding was very surprising because the same process does not work result-effectively with triphenodioxazines of the PV 23 type.

The present invention therefore provides a process for the preparation of compounds of the general formula (I) 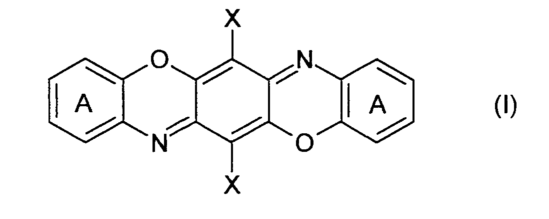 where
X represents halogen atoms, preferably chlorine or bromine, especially chlorine;
the rings labeled A are linearly or angularly fused in position 1,2; 2,3 or 3,4, and in position 8,9; 9,10 or 10,11 to a 5- or 6-membered heterocyclic ring containing in the ring one nitrogen atom and one oxygen atom, or containing in the ring two nitrogen atoms,
comprising an oxidation of a 3,6-bisarylamino-2,5-dihalobenzoquinone of the formula (II) 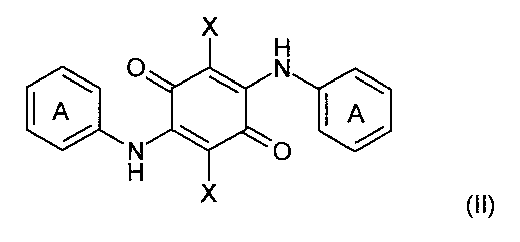 in an aprotic-polar organic solvent in the presence of an organic sulfonic acid.

Preferred compounds of formula (I) are those with formulae (Ia), (IIa), (IIIa) and (IIIb) 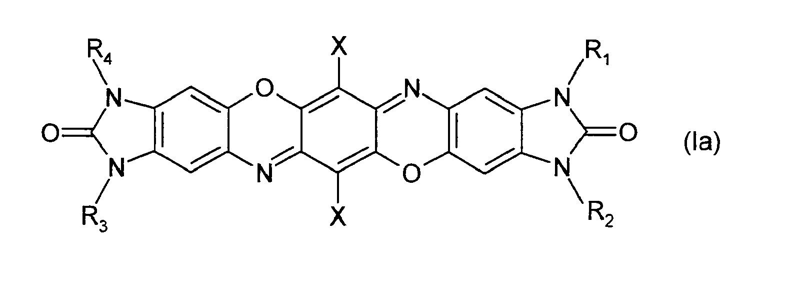 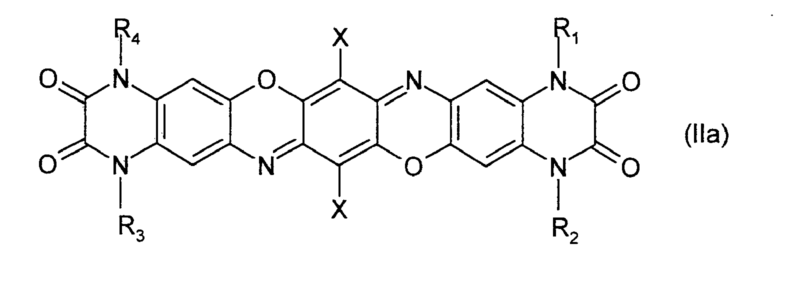 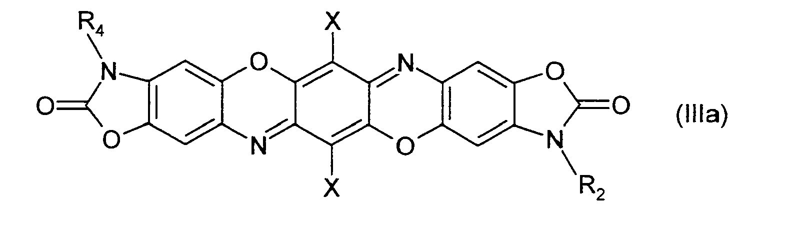 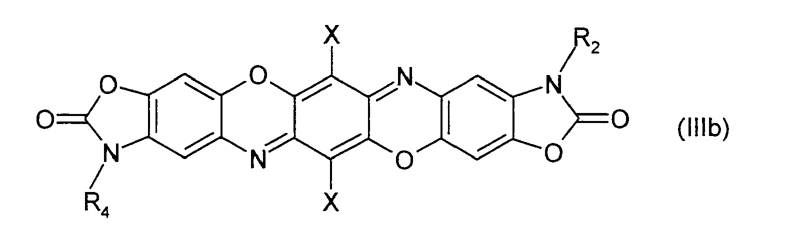 where X is hydrogen or halogen, R₁, R₂, R₃ and R₄, independently from one another, are hydrogen, a C₁₋₈ alkyl radical, a substituted or unsubstituted phenyl, benzyl, benzanilide or naphthyl radical, a substituted or unsubstituted C₅₋₆ cycloalkyl radical.

The substituents R₁, R₂, R₃ and R₄, independently from one another, are preferably hydrogen, a methyl radical, an ethyl radical, an n- or iso-propyl radical, a n-, iso-, sec- or tert-butyl radical, a cyclohexyl radical, a substituted or unsubstituted benzanilide radical, a naphthyl radical, an unsubstituted phenyl radical, a phenyl radical substituted one or more times by radicals selected from the group consisting of halogen, preferably chlorine, nitro, C₁₋₈ alkyl radicals, preferably C₁₋₈ alkyl radicals, and C₁₋₈ alkoxy radicals.

Examples for aprotic-polar organic solvents which can be used in the present process are ethers, esters, ketones, amines, nitromethane, chlorobenzenes, and chlorotoluenes. Advantageous are chlorobenzene, 1,2-dichlorobenzene, 1,3-dichlorobenzene, 1,4-dichlorobenzene, 2-chloro toluene, 3-chloro toluene, 4-chloro toluene, 2,4-dichloro toluene, 3-methyl anisol, 4-methyl anisol, especially 1,2-dichlorobenzene, 4-chloro toluene, 2,4-dichloro toluene and 4-methyl anisol.
The solvent is judiciously used in a 3- to 20-fold amount, preferably 5- to 15-fold amount, based on the weight of the compound of formula (II).

Examples for organic sulfonic acids which can be used in the present process are methane sulfonic acid, benzene sulfonic acid, toluene sulfonic acid and xylene sulfonic acid. The amounts of the organic sulfonic acids can range from 10 to 360 mol %, preferably from 40 to 240 mol %, based on the compound of formula (II).

The temperatures of the present oxidation process can be from 20 to 200°C, preferably from 60 to 180°C, particularly from 100 to 170°C, especially preferred from 120 to 160°C.

Examples for oxidizing and ring closure agents which can be used in the present process are aromatic sulfonyl chlorides, such as benzenesulfonylchloride, toluenesulfonylchloride and chloranil. Especially preferred are mixtures of benzenesulfonylchloride or toluenesulfonylchloride with chloranil. The amounts of the oxidizing and ring closure agents can range from 70 to 240 mol %, preferably from 90 to 260 mol %, based on the compound of formula (II).

If a mixture of chloranil with said sulfonylchlorides is used, the amount by weight of chloranil to sulfonylchloride preferably ranges from 1 : 10 to 1 : 2, especially from 1 : 3 to 1 : 5.

The starting compounds of general formula (II) can be prepared by methods well-known to the skilled artisan, e.g. by a condensation reaction of one equivalent of chloranil with two equivalents of an aromatic amine "H₂N-A-ring system".

It is also possible to make the compound of formula (I) in a one-pot reaction starting from one equivalent of chloranil and two equivalents of said aromatic amine "H₂N-A-ring system".

The pigments formed by a process according to the invention are suitable for the mass pigmentation of suitable substrates including synthetic polymers, synthetic resins and regenerated fibers optionally in the presence of solvents. These substrates more particularly include oil, water and solvent based surface coatings, polyester spinning melts, polyethylene, polystyrene and polyvinyl chloride molding materials, rubber, synthetic and natural leather. Furthermore, the pigments can be used in the manufacture of printing inks, for the mass coloration of paper and for coating and printing textiles, as well as in the dying of leather.
When applied to the above-mentioned substrates the pigments are found to be resistant to migration and fast to light, and show fastness to washing, chlorite, hypochlorite and peroxide bleaching, rubbing, overspraying and solvents. Notably, the pigments display high tinctorial power, good opacity and good heat stability and high light fastness. Leather is used in the production of a variety of goods such as shoes, upholstery, garment, and lately in increasing amounts in the automotive industry. Leather is used for dashboards, steering-wheel covers, door panels, gear lever handles, seat covers and headrests. As the interior of cars is subject to extreme changes of temperature, intense sunlight, and considerable wear and tear, the pigments employed in the dying process therefore need to fulfill demanding specifications such as: high light fastness, high heat resistance, high resistance to migration, high perspiration resistance.

There now follows a series of examples which serve to illustrate the invention.

### Reference Example:

### 6,14-Dichloro-3,11-diethyl-1,3,9,11-tetrahydro-diimidazo[4,5-b:4',5'-m]-triphenodioxazine-2,10-dione

### a) 2,5-Dichloro-3,6-bis(1-ethyl-2-oxo-1,3-dihydrobenzimidazol-5-yl)amino-1,4-benzoquinone

90 g of 5-amino-1-ethyl-1,3-dihydrobenzimidazol-2-one and 42 g of anhydrous sodium hydrogencarbonate are suspended in 1000 g of dimethylacetamide and the mixture is heated up to 70°C. 62 g of chloranil are added over 2 h. The mixture is heated under reflux for 1 h, cooled down to 100°C, filtered at 100°C, washed with 1000 g of hot dimethylacetamide and washed with water until free of chloride. Drying at 80°C under reduced pressure yields 105 g of a brown powder of the following formula

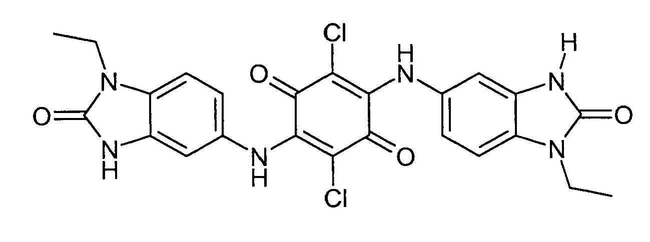

Yield 81 %

### b) 6,14-Dichloro-3,11-diethyl-1,3,9,11-tetrahydro-diimidazo[4,5-b:4',5'-m]triphenodioxazine-2,10-dione by oxidation with air (WO 2002046315)

53 g of 2,5-dichloro-3,6-bis(1-ethyl-2-oxo-1,3-dihydrobenzimidazol-5-yl)amino-1,4-benzoquinone (as obtained in Example 1 a) and 28 g of potassium carbonate are suspended in 400 g of dimethylacetamide and the mixture is heated up to reflux. Under inlet of air (ca. 50 l/h) the mixture is refluxed for 10 h, filtered at 100°C, washed with 400 g of hot dimethylacetamide and washed with water until free of chloride. Drying at 80°C under reduced pressure yields 21 g of a green-metallic powder of the following formula

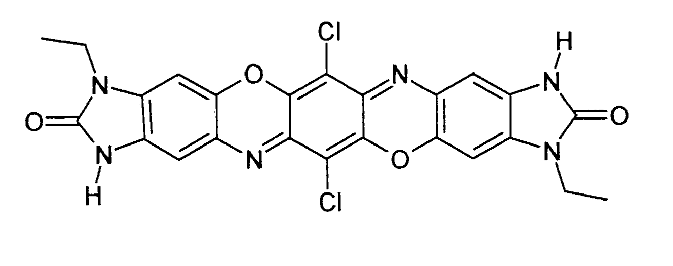

Yield 40 %

### Example 1

132 g of 2,5-dichloro-3,6-bis(1-ethyl-2-oxo-1,3-dihydrobenzimidazol-5-yl)amino-1,4-benzoquinone (as obtained in Reference Example 1 a), and 10 g of chloranil are suspended in 1250 g of 1,2-dichlorobenzene. The mixture is then heated. Between 80 - 100°C there are added 40 g of methanesulfonic acid. At around 135 - 140°C there are added 45 g of benzenesulfonyl chloride. The reaction mixture is then heated to 145°C for 4 hours, cooled to 100°C and collected by filtration. The filter cake is washed with 1,5 L of hot 1,2-dichlorobenzene and then suspended in boiling water, collected by filtration and washed with water until free of chloride. Drying at 80°C yielded 114 g of a green-metallic powder of the following formula.

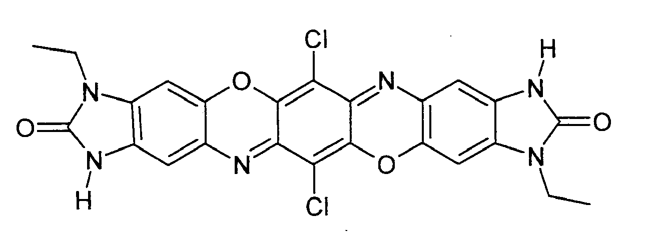

Yield: 87,3 %

### Example 2

13,2 g of 2,5-dichloro-3,6-bis(1-ethyl-2-oxo-1,3-dihydrobenzimidazol-5-yl)amino-1,4-benzoquinone (as obtained in Reference Example 1a), and 1,25 g of chloranil and 1 g of sodium 2,5-dimethylbenzenesulfonate are suspended in 125 ml of 1,2-dichlorobenzene. The mixture is then heated. Between 80 - 100°C there are added 4 ml of methanesulfonic acid. At around 135 - 140°C there are added 4,5 ml of benzenesulfonyl chloride. The reaction mixture is then heated to 145°C for 4 hours, cooled to 100°C and collected by filtration. The filter cake is washed with 150 ml of hot 1,2-dichlorobenzene and then suspended in boiling water, collected by filtration and washed with water until free of chloride. Drying at 80°C yielded 12,2 g of a green-metallic powder of the following formula.

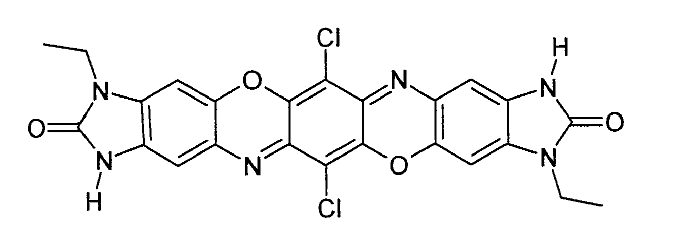

Yield: 93.1 %

### Example 3

13,2 g of 2,5-dichloro-3,6-bis(1-ethyl-2-oxo-1,3-dihydrobenzimidazol-5-yl)amino-1,4-benzoquinone (as obtained in Reference Example 1a), and 3,1 g of sodium 2,5-dimethylbenzenesulfonate are suspended in 125 ml of 4-chlorotoluene. The mixture is then heated. Between 80 - 100°C there are added 4 ml of methanesulfonic acid. At around 135 - 140°C there are added 4.5 ml of benzenesulfonyl chloride. The reaction mixture is then heated to 145°C for 4 hours, cooled to 100°C and collected by filtration. The filter cake is washed with 150 ml of hot 4-chlorotoluene and then suspended in boiling water, collected by filtration and washed with water until free of chloride. Drying at 80°C yielded 12.1 g of a green-metallic powder of the following formula.

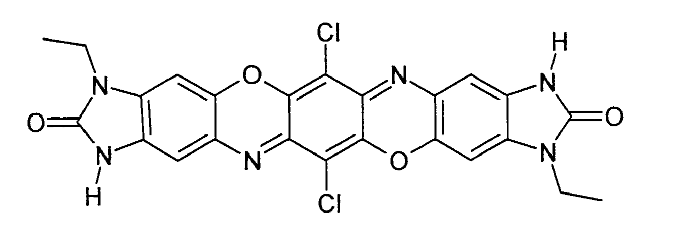

Yield: 92.4 %

### Example 4

13,2 g of 2,5-dichloro-3,6-bis(1-ethyl-2-oxo-1,3-dihydrobenzimidazol-5-yl)amino-1,4-benzoquinone (as obtained in Reference Example 1a), and 1,25 g of chloranil and 1 g of sodium 2,5-dimethylbenzenesulfonate are suspended in 125 ml of 2,4-dichlorotoluene. The mixture is then heated. Between 80 - 100°C there are added 4 ml of methanesulfonic acid. At around 135 - 140°C there are added 4.5 ml of benzenesulfonyl chloride. The reaction mixture is then heated to 145 °C for 4 hours, cooled to 100°C and collected by filtration. The filter cake is washed with 150 ml of hot 2,4-dichlorotoluene and then suspended in boiling water, collected by filtration and washed with water until free of chloride. Drying at 80°C yielded 12 g of a green-metallic powder of the following formula.

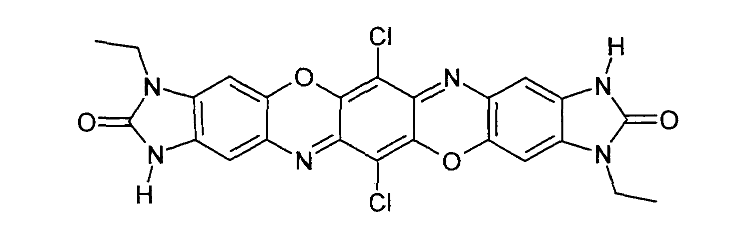

Yield: 91.6 %

### Example 5

13,2 g of 2,5-dichloro-3,6-bis(1-ethyl-2-oxo-1,3-dihydrobenzimidazol-5-yl)amino-1,4-benzoquinone (as obtained in Reference Example 1 a), and 1,25 g of chloranil and 1 g of sodium 2,5-dimethylbenzenesulfonate are suspended in 125 ml of 2,4-dichlorotoluene. The mixture is then heated. Between 80 - 100°C there are added 9,8 g of benzenesulfonic acid. At around 135 - 140°C there are added 4.5 ml of benzenesulfonyl chloride. The reaction mixture is then heated to 145°C for 4 hours, cooled to 100°C and collected by filtration. The filter cake is washed with 150 ml of hot 2,4-dichlorotoluene and then suspended in boiling water, collected by filtration and washed with water until free of chloride. Drying at 80°C yielded 9.3 g of a green-metallic powder of the following formula.

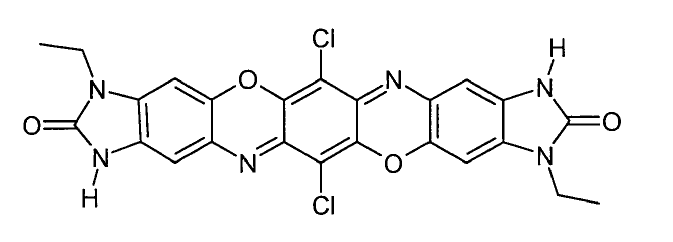

Yield: 71 %

### Example 6

13,2 g of 2,5-dichloro-3,6-bis(1-ethyl-2-oxo-1,3-dihydrobenzimidazol-5-yl)amino-1,4-benzoquinone (as obtained in Reference Example 1 a), and 1 g of chloranil and 1 g of sodium 2,5-dimethylbenzenesulfonate are suspended in 125 ml of 2,4-dichlorotoluene. The mixture is then heated. Between 80 - 100°C there are added 4 ml of methanesulfonic acid. At around 135 - 140°C there are added 6.7 g of toluenesulfonyl chloride. The reaction mixture is then heated to 145°C for 4 hours, cooled to 100°C and collected by filtration. The filter cake is washed with 150 ml of hot 2,4-dichlorotoluene and then suspended in boiling water, collected by filtration and washed with water until free of chloride. Drying at 80°C yielded 12.7 g of a green-metallic powder of the following formula.

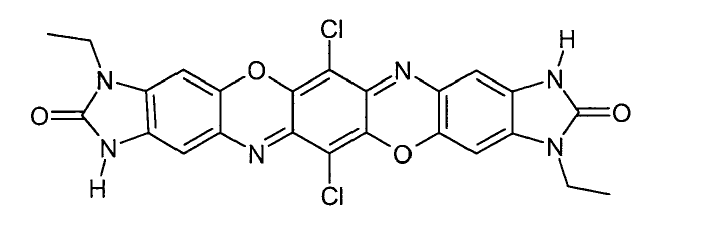

Yield: 97 %

### Example 7 (One-Pot-Reaction)

75,4 g of 5-amino-1-ethyl-1,3-dihydrobenzimidazol-2-one and 19,7 g of anhydrous sodium hydrogencarbonate are suspended in 1 L of 1,2-dichlorobenzene and the mixture is heated up to 82°C. Over a period of 2 h are added 27 g of chloranil. The mixture is heated for 5 h. After the addition of 24.8 g of sodium

2,5-dimethylbenzenesulfonate the temperature is raised to 130°C, and 32 ml of methanesulfonic acid are added. The temperature is then raised to 140°C and 36 ml of benzenesulfonyl chloride are added. The reaction mixture is then heated for 3 h at 160°C, cooled to 100°C and collected by filtration. The filter cake is washed with 500 ml of hot 1,2-dichlorobenzene and then suspended in boiling water, collected by filtration and washed with water until free of chloride. Drying at 80°C yielded 80.9 g of a green-metallic powder of the following formula.

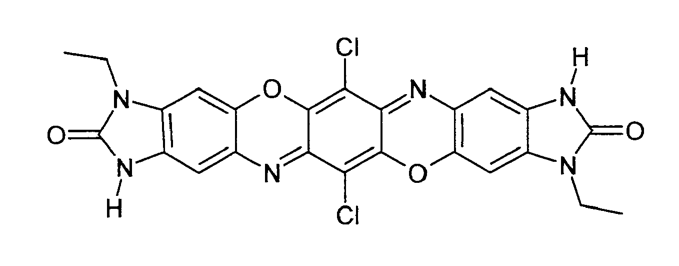

Yield: 77.3 %

### Example 8

12,5 g of 2,5-dichloro-3,6-bis(1-methyl-2-oxo-1,3-dihydrobenzimidazol-5-yl)amino-1,4-benzoquinone (obtained in analogy to Example 1 a), and 1,25 g of chloranil are suspended in 125 ml of 1,2-dichlorobenzene. The mixture is then heated. Between 80 - 100°C there are added 4 ml of methanesulfonic acid. At around 135 - 140°C there are added 4.5 ml of benzenesulfonyl chloride. The mixture is then heated to 145°C for 4 hours, cooled to 100°C and collected by filtration. The filter cake is washed with 150 ml of hot 1,2-dichlorobenzene and then suspended in boiling water, collected by filtration and washed with water until free of chloride. Drying at 80°C yielded 10.6 g of a green-metallic powder of the following formula.

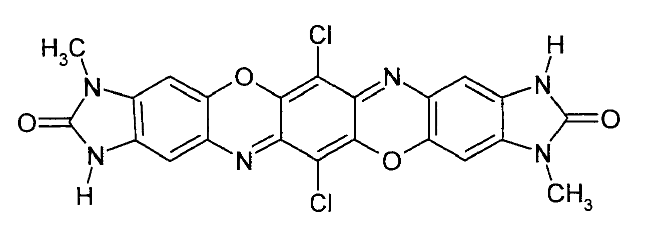

Yield: 85.6 %

### Example 9

125 g of 2,5-dichloro-3,6-bis(1-methyl-2-oxo-1,3-dihydrobenzimidazol-5-yl)amino-1,4-benzoquinone (obtained in analogy to Example 1 a), and 10 g of chloranil and 31 g of sodium 2,5-dimethylbenzenesulfonate are suspended in 1250 ml of 1,2-dichlorobenzene. The mixture is then heated. Between 80 - 100°C there are added 40 ml of methanesulfonic acid. At around 135 - 140°C there are added 45 ml of benzenesulfonyl chloride. The mixture is then heated to 160°C for 4 hours, cooled to 100°C and collected by filtration. The filter cake is washed with 1,5 L of hot 1,2-dichlorobenzene and then suspended in boiling water, collected by filtration and washed with water until free of chloride. Drying at 80°C yielded 119,8 g of a green-metallic powder of the following formula.

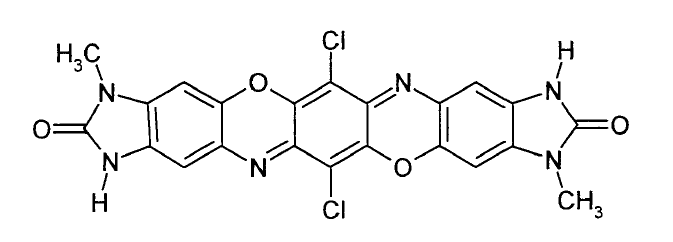

Yield: 96.6 %

### Example 10

12,5 g of 2,5-dichloro-3,6-bis(1-methyl-2-oxo-1,3-dihydrobenzimidazol-5-yl)amino-1,4-benzoquinone (obtained in analogy to Example 1a), and 1,25 g of chloranil and 1 g of sodium 2,5-dimethylbenzenesulfonate are suspended in 125 ml of 4-methylanisole. The mixture is then heated. Between 80 - 100°C there are added 4 ml of methanesulfonic acid. At around 135 - 140°C there are added 4,5 ml of benzenesulfonyl chloride and 4,5 ml of benzenesulfonyl chloride. The mixture is then heated to 140°C for 4 hours, cooled to 100°C and collected by filtration. The filter cake is washed with 150 ml of hot 4-methylanisole and then suspended in boiling water, collected by filtration and washed with water until free of chloride. Drying at 80°C yielded 10.5 g of a green-metallic powder of the following formula

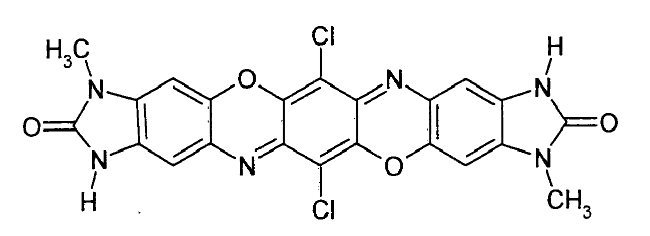

Yield: 85.1 %

### Example 11

130,4 g of 5-amino-1-methyl-1,3-dihydrobenzimidazol-2-one, 141,6 g of 5-amino-1-ethyl-1,3-dihydrobenzimidazol-2-one and 134,4 g of anhydrous sodium hydrogencarbonate are suspended in 2,5 L of 1,2-dichlorobenzene and the mixture is heated up to 82°C. Over a period of 2 h are added 197,6 g of chloranil. The mixture is heated for 5 h. After the addition of 50 g of sodium 2,5-dimethylbenzenesulfonate the temperature is raised to 130°C, and 65 ml of methanesulfonic acid are added. The temperature is then raised to 140°C and 72 ml of benzenesulfonyl chloride are added. The reaction mixture is then heated for 3 h at 155°C, cooled to 100°C and collected by filtration. The filter cake is washed with 1500 ml of hot 1,2-dichlorobenzene and then suspended in boiling water, collected by filtration and washed with water until free of chloride. Drying at 80°C yielded 273 g of a green-metallic powder as a mixture of the following formulae. 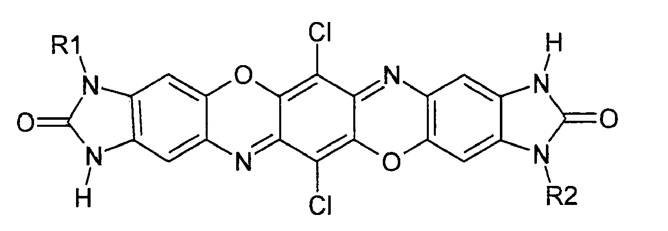
R¹ = R² = Ethyl
R¹ = R² = Methyl
R¹ = Methyl, R² = Ethyl

Yield: 64.7 %

The pigments so obtained show excellent pigment properties like dispersibility, color strength, excellent heat and light stability when applied in engineering plastics or coatings.

Application of Pigment Blue 80 in a non-ageing finish for automotive upholstery.

Automotive crust leather is furnished with a bottom coat employing the following mixture

| | |
|---|---|
| 600 g | of a binder combination composed of a polyurethane-binder and a polyacrylatebinder |
| 300 g | of an additive combination composed of fillers and wax-dispersions |
| 100 g | of Pigment Blue 80 |

This mixture is applied by spray dyeing (coating quantity 60 g/m²), dried, hot pressed at 90°C at 50 bar in a through-feed process, followed by 6 h of milling.

On top of this bottom layer a colour coat consisting of

| | |
|---|---|
| 550 g | of a binder combination composed of a polyurethane-binder and a polyacrylatebinder |
| 220 g | of an additive combination composed of fillers and wax-dispersions |
| 100 g | of Pigment Blue 80 |
| 110 g | of water |
| 20 g | of a cross-linking agent based on isocyanate |

is applied by spray dyeing (coating quantity 25 g/m²) and dried

Finally a top finish consisting of

| | |
|---|---|
| 450 g | of a delustered polyurethane-dispersion |
| 140 g | of a binder combination composed of a polyurethane-binder and a polyacrylatebinder |
| 220 g | of an additive combination composed of fillers and wax-dispersions |
| 270 g | of water |
| 70 g | of an additive combination composed of siloxane emulsions and wash-dispersions |
| 70 g | of a cross-linking agent based on isocyanate |

is applied twice by spray dyeing (coating quantity 20 g/m²) and dried after every application.

## Claims

1. A process for the preparation of compounds of the general formula (I) 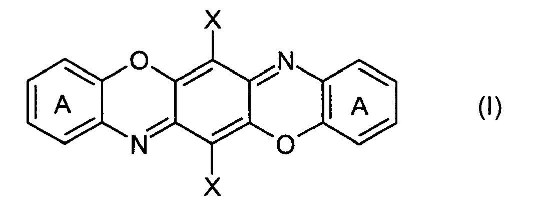 where
X are halogen atoms,
the rings labeled A are linearly or angularly fused in position 1,2; 2,3 or 3,4, and in position 8,9; 9,10 or 10,11, to a 5- or 6-membered heterocyclic ring containing in the ring one nitrogen atom and one oxygen atom, or containing in the ring two nitrogen atoms,
comprising an oxidation of a 3,6-bisarylamino-2,5-dihalobenzoquinone of the formula (II) 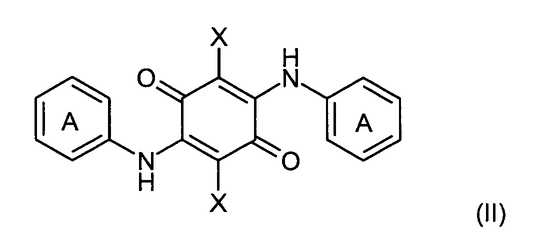 in an aprotic-polar organic solvent in the presence of an organic sulfonic acid.

2. The process as claimed in claim 1, wherein the compounds of formula (I) are those with formulae (Ia), (IIa), (IIIa) and (IIIb) 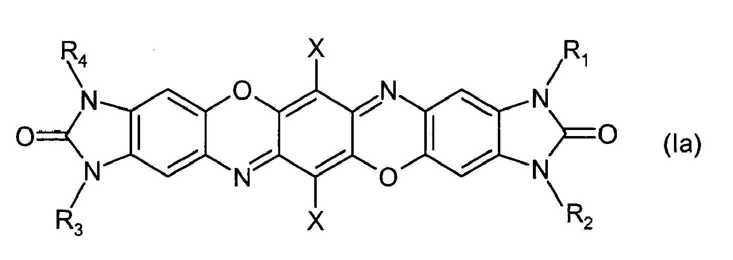 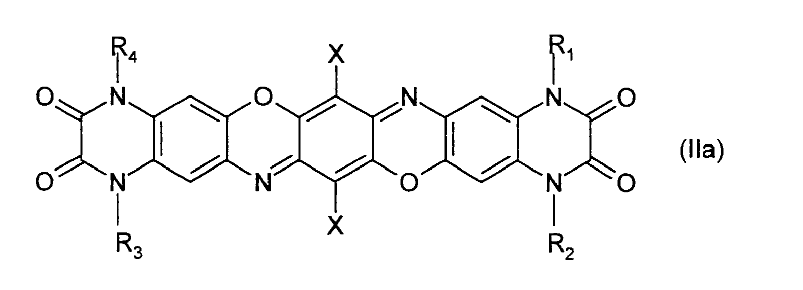 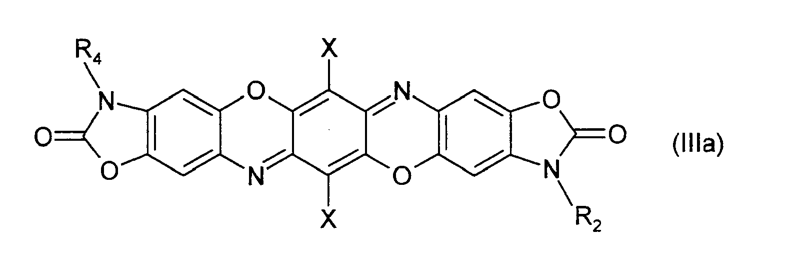 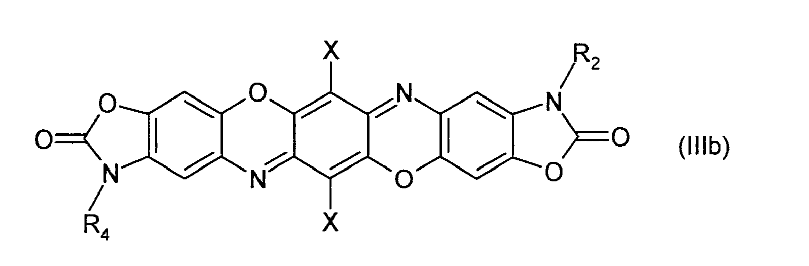 where X is hydrogen or halogen, R₁, R₂, R₃ and R₄, independently from one another, are hydrogen, a C₁₋₈ alkyl radical, a substituted or unsubstituted phenyl, benzyl, benzanilide or naphthyl radical, a substituted or unsubstituted C₅₋₆ cycloalkyl radical.

3. The process as claimed in claim 1 or 2, in which the aprotic-polar organic solvents are ethers, esters, ketones, amines, nitromethane, chlorobenzenes, chlorotoluenes, or a mixture thereof.

4. The process as claimed in any of claims 1 to 3, wherein the aprotic-polar solvents are selected from the group consisting of chlorobenzene, 1,2-dichlorobenzene, 1,3-dichlorobenzene, 1,4-dichlorobenzene, 2-chloro toluene, 3-chloro toluene, 4-chloro toluene, 2,4-dichloro toluene, 3-methyl anisol, 4-methyl anisol, and nitromethane.

5. The process as claimed in any of claims 1 to 4, wherein the organic sulfonic acid is selected from the group consisting of methane sulfonic acid, benzene sulfonic acid, toluene sulfonic acid and xylene sulfonic acid.

6. The process as claimed in any of claims 1 to 5, wherein the organic sulfonic acid is used in an amount from 10 to 360 mol %, based on the compound of formula (II).

7. The process as claimed in any of claims 1 to 6, wherein the oxidation is performed at a temperature of 120 to 160°C.

8. The process as claimed in any of claims 1 to 7, wherein the oxidation is carried out by means of benzenesulfonylchloride, toluenesulfonylchloride and/or chloranil.
